# EUROPEAN PATENT SPECIFICATION

(11) **EP 2 821 638 B1**
(45) Date of publication and mention of the grant of the patent: **07.09.2016**
(21) Application number: 13843057.4
(22) Date of filing: 18.02.2013
(51) Int. Cl.: F03D 9/00, F04B 1/047, F04B 17/02, F04B 1/053

(54) **RENEWABLE ENERGY GENERATOR**
GENERATOR FÜR ERNEUERBARE ENERGIEN
GÉNÉRATEUR D'ÉNERGIE RENOUVELABLE

(43) Date of publication of application: 07.01.2015
(73) Proprietor: Mitsubishi Heavy Industries, Ltd., Tokyo 108-8215 (JP)
(72) Inventor: UEHARA, Osamu, Tokyo 108-8215 (JP); OSAKA, Hiromi, Tokyo 108-8215 (JP)
(74) Representative: Intès, Didier Gérard André
(86) International application number: PCT/JP2013/053857
(87) International publication number: WO 2014/125644

(56) References cited:
- EP-A2- 2 151 574
- WO-A1-2012/022953
- JP-A- H08 508 557
- JP-A- 2006 112 460
- JP-A- 2012 526 947
- JP-A- 2013 501 868
- US-A1- 2012 257 994

## Description

### [Technical Field]

The present invention relates to a power generating apparatus of a renewable energy type.

### BACKGROUND ART

From the perspective of preserving the global environment, renewable energy power generating apparatuses utilizing renewable energy, particularly wind turbine generators utilizing wind power, have become popular in recent years. In a wind turbine generator, wind power received by a blade is converted into torque of a rotation shaft, and this torque is transmitted to a generator by a power transmitting mechanism to convert the torque into electric power. As a power transmitting mechanism, a hydraulic machine may be used.

As a hydraulic machine, a radial piston hydraulic machine having a plurality of pistons arranged in a circumferential direction of a rotation shaft is known.

Hydraulic machine of this type comprise a converting mechanism for converting reciprocating motion of the piston into rotational motion of the rotation shaft. For instance, a hydraulic machine described in Patent Reference 1 comprises a ring cam (a lobed cam) fixed to a rotation shaft and a roller disposed between a cam face of the ring cam and a piston. The ring cam is constituted by a plurality of segments arranged in the circumferential direction of the rotation shaft, and each of the segments is fixed to the rotation shaft with bolts. Each of the segments has a partial cam face which constitutes the cam face of the ring cam, and has a mounting surface curved into an arc shape facing the rotation shaft.

### [Citation List]

### [Patent References]

[Patent Reference 1] GB 248490 A
[Patent Reference 2] WO2012/022953 A1 which is considered to be the closest prior art and shows a power generating apparatus using a lobed cam and roller mechanism

### SUMMARY

### [Technical Problem]

In order to transmit torque efficiently, it is preferable in a hydraulic machine that the cam face of the ring cam being attached to the rotation shaft has high dimensional accuracy. In this point, the hydraulic machine described in Patent Reference, the dimensional accuracy of the cam face of the ring cam relies on not just the dimensional accuracy of the partial cam face of each segment but the dimensional accuracy of the mounting surface disposed on an opposite side from the partial cam face. Therefore, in order to improve the dimensional accuracy of the cam face of the ring cam, it is necessary to improve size accuracy of both the partial cam face and the mounting surface. However, this is a limit to dimensional accuracy improvement.

It is an object of at least one embodiment of the present invention to provide a power generating apparatus of a renewable energy type equipped with a radial piston hydraulic machine, whereby dimensional accuracy of a cam face of a lobed cam can be easily enhanced.

### [Solution to Problem]

A power generating apparatus of a renewable energy type for generating electric power from renewable energy according to claim 1 of the present invention comprises:
a main shaft configured to rotate using the renewable energy;
a hydraulic pump configured to pressurize and discharge working fluid by torque of the main shaft;
a hydraulic motor configured to apply torque using pressure of the working fluid discharged by the hydraulic pump; and
a generator configured to generate power using the torque applied by the hydraulic motor;
a fluid working machine of a radial piston type constituted by one of the hydraulic pump or the hydraulic motor, and
the fluid working machine comprises: a rotation shaft; at least one cylinder part extending along a radial direction of the rotational shaft; a piston arranged in the cylinder part and forming a working chamber with the cylinder part; and a converting mechanism for performing conversion between reciprocating motion of the piston and rotational motion of the rotation shaft.

The converting mechanism comprises: a lobed cam fixed to the rotation shaft and having a cam face; and a roller interposed between the cam face and the piston.

The lobed cam is formed by a plurality of segments arranged along a circumferential direction of the rotation shaft, each of the plurality of the segments having a flat mounting surface facing the rotation shaft.

In the above power generating apparatus of a renewable energy type, one of the hydraulic pump or the hydraulic motor has a lobed cam which is formed by a plurality of segments, and each of the segments has a flat mounting surface facing the rotation shaft. As the mounting surface of each of the segments is flat, compared to a curved mounting surface, the dimensional accuracy of the mounting surface can be improved. Therefore, the dimensional accuracy of the cam face of the lobed cam entirely relies on the dimensional accuracy of the partial cam face and thus, the dimensional accuracy of the cam face can be easily improved. Further, with improved dimensional accuracy of the cam face of the lobed cam, the roller can travel on the cam face smoothly. As a result, torque of the rotation shaft can be transmitted to the generator efficiently, thereby improving power generation efficiency.

In some embodiments, the rotation shaft has a plurality of flat loading surfaces facing the mounting surfaces of the plurality of the segments, respectively.

With this configuration, as the rotation shaft has flat loading surfaces, each of the segments can be easily mounted to the rotation shaft by a simple structure. Further, as the mounting surface and the loading surface are both flat, the rotation shaft can support large load. As a result, the converting mechanism can transmit large torque between the piston and the rotation shaft.

In some embodiments, each of the segments has a partial cam face which forms a part of the cam face, and
the partial cam face includes at least one top portion corresponding to a top dead center of the piston, at least one bottom portion corresponding to a bottom dead center of the piston, and a slope portion extending between the top portion and the bottom portion.

The partial cam face includes: a high-pressure section configured so as to contact the roller in a high-pressure period in which pressure of the working chamber is high; and a low-pressure section configured so as to contact the roller in a low-pressure period in which the pressure of the working chamber is low. It is preferable that the partial cam face is smooth and the high-pressure section of the partial cam face, in particular, is smooth. In this point, with this configuration, the partial cam face of each segment has the slope portion extending between the top portion and the bottom portion. Thus, by arranging the slope portion in the high-pressure section, it is possible to attain a smooth high-pressure section.

In some embodiments, the power generating apparatus of a renewable energy type further comprises a plurality of keys for engaging the plurality of the segments with the rotation shaft.

With this configuration, by means of the plurality of keys, the plurality of the segments can be engaged with the rotation shaft by a simple structure.

Further, with this configuration, as the mounting surface is flat, the segment is restricted from rotating around the rotation shaft by the mounting surface. Thus, it is possible to reduce the load acting on the key, and large torque can act on each of the segments. As a result, it is possible to increase the output of the power generating apparatus of a renewable energy type without causing increase in the size of the hydraulic machine.

In some embodiments, each of the keys is disposed adjacent to center of gravity of each of the segments.

With this configuration, the center of gravity of each of the segments is disposed adjacent to the key and thus, the segment is stabilized by supporting a part of the segment near the center of gravity of the segment by the key

In some embodiments, each of the segments has a reference surface which is usable as a reference to form the partial cam face, and
the mounting surface constitutes the reference surface.

When the partial cam face of the segment is formed by processing, the reference surface for processing is needed. In this point, with this configuration, the flat mounting surface can serve as the reference surface and thus, the dimensional accuracy of the partial cam face can be easily improved. Moreover, the dimension of the partial cam face can be easily inspected on the basis of the mounting surface as reference.

In some embodiments, the rotation shaft has a plurality of bolt holes opening in a surface of the rotation shaft,
each of the segments has a plurality of through-holes communicating with the plurality of bolt holes, respectively, and
each of the segments is fixed to the rotation shaft by a plurality of bolts extending through the plurality of through-holes and screwed into the plurality of bolt holes, respectively.

With this configuration, the segment can be fixed to the rotation shaft reliably by a simple structure.

In some embodiments, the through-hole is disposed in a region outside the slope portion.

If the through-hole is disposed in the slope portion, a dent is formed in the slope portion due to the through-hole. In this point, with this configuration, as the through-hole is disposed in a region outside the slope portion, it is possible to make the slope portion smoother.

In some embodiments, the segment includes a fastening portion where the through-hole is formed, the fastening portion being arranged on both sides of the slope portion extending in an axial direction of the rotation shaft.

With this configuration, the fastening portion is arranged on both sides of the slope portion in the axial direction of the rotation shaft. Thus, the entire area of the partial cam face including the slope portion can be made smoother.

In some embodiments, the plurality of bolts includes four bolts disposed symmetrically around the center of gravity of the segment.

With this configuration, the segment is fastened to the rotation shaft using four bolts disposed symmetrically around the center of gravity of the segment, thereby stabilizing the segment.

In some embodiments, the piston includes a regulating portion for regulating movement of the roller in an axial direction of the roller.

With this configuration, as the piston includes the regulating portion, it is no longer necessary to provide a regulating portion on the rotation shaft. This makes it easier to form the smooth partial cam face having a high degree of freedom in the segment shape.

In some embodiments, the partial cam face includes: a high-pressure section configured so as to contact the roller in a high-pressure period in which pressure of the working chamber is high; and a low-pressure section configured so as to contact the roller in a low-pressure period in which the pressure of the working chamber is lower than in the high-pressure period, and
each end portion of the partial cam faces in a tangent direction of the rotation shaft constitutes the low-pressure section.

In the case where the cam face is constituted by a plurality of partial cam faces, an irregular region is formed in the cam face by a gap between end portions of adjacent two partial cam faces. The irregular region is inevitably rough compared to other regions of the cam face. With the above configuration, each end portion of the partial cam faces constitutes the low-pressure section and thus, the irregular region is disposed in the low-pressure section. Therefore, even though the irregular region exists in the cam face, the roller can travel smoothly on the cam face.

In some embodiments, the partial cam face has length which corresponds to one reciprocating motion of the piston.

With this configuration, as the partial cam face has length which corresponds to one reciprocating motion of the piston, the segment can be reduced in size and weight.

In some embodiments, the segment is formed by treating material of the segment with crude processing, hardening treatment and precision machining in this order.

With this configuration, the lobed cam is constituted by a plurality of segments, and each of the segments is formed by treating material of the segment with crude processing, hardening treatment and precision machining in this order. Thus, manufacturing of the lobed cam no longer requires a large machine tool or a large furnace.

In some embodiments, the power generating apparatus of a renewable energy type further comprises at least one blade configured to rotate the rotation shaft upon receiving wind in a form of the renewable energy, and the power generating apparatus of a renewable energy type is a wind turbine generator.

With this configuration, the wind turbine generator can efficiently generate electric power by using wind.

### [Advantageous Effects]

According to at least one embodiment of the present invention, it is possible to provide a power generating apparatus of a renewable energy type equipped with a radial piston hydraulic machine, whereby dimensional accuracy of a cam face of a lobed cam can be easily improved.

### BRIEF DESCRIPTION OF DRAWINGS

FIG. 1 is a schematic view of a power generating apparatus of a renewable energy type according to some embodiments.
FIG. 2 is a cross-sectional view of a radial piston hydraulic machine which is applicable to a hydraulic motor or a hydraulic pump of FIG. 1.
FIG.3 is a partial cross-sectional view schematically illustrating a part illustrated in FIG. 2 in a magnified form.
An upper part of FIG. 4 is a side view of a schematic configuration of a segment illustrated in FIG. 3, and a lower part is a plan view of a schematic configuration of the segment.
FIG. 5 is a schematic view of a fastening structure of a rotation shaft and a segment illustrated in FIG. 3.
   An upper part of FIG. 6 is a cross-sectional view of a schematic configuration of a segment according to some embodiments, and a lower part of FIG. 6 is a plan view of the schematic configuration of the segment.
FIG. 7 schematically illustrates side views of the configuration of the piston illustrated in FIG. 3, when seen from two directions.
FIG. 8 is a flow chart showing a process of a manufacturing method of the segment illustrated in FIG. 4.
FIG. 9 is an illustration for explaining a carburizing quenching region in the segment illustrated in FIG. 4.
FIG.10 is a schematic longitudinal section of a hydraulic machine according to some embodiments.
FIG.11 is a perspective view illustrating a configuration of a rotation shaft illustrated in FIG. 10.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

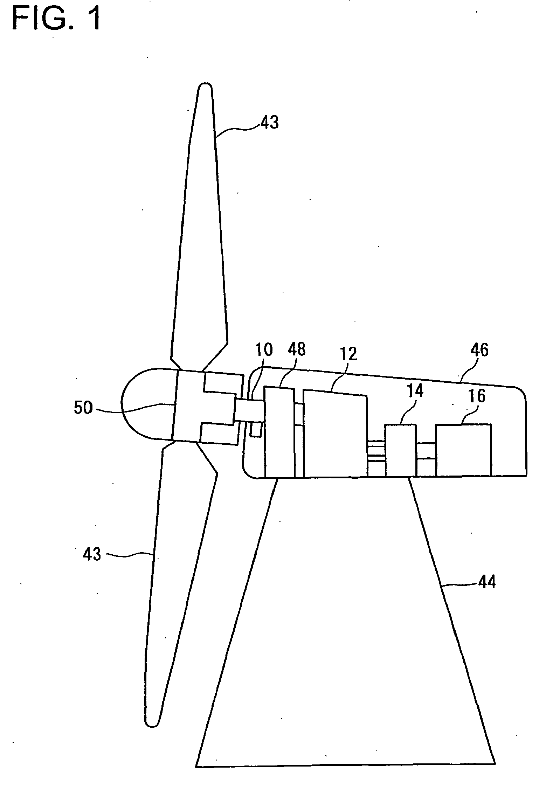

FIG. 1 is a schematic view of a power generating apparatus of a renewable energy type according to some embodiments.

The power generating apparatus of a renewable energy type is configured to produce electric power from renewable energy. The power generating apparatus of a renewable energy type comprises, as illustrated in FIG. 1, a main shaft 10 configured to be rotated using renewable energy, a hydraulic pump 12 to pressurize and discharge working fluid by torque of the main shaft 10, a hydraulic motor 14 configured to apply torque using pressure of the working fluid discharged by the hydraulic pump 14, and a generator 16 configured to generate power using the torque applied by the hydraulic motor 14.

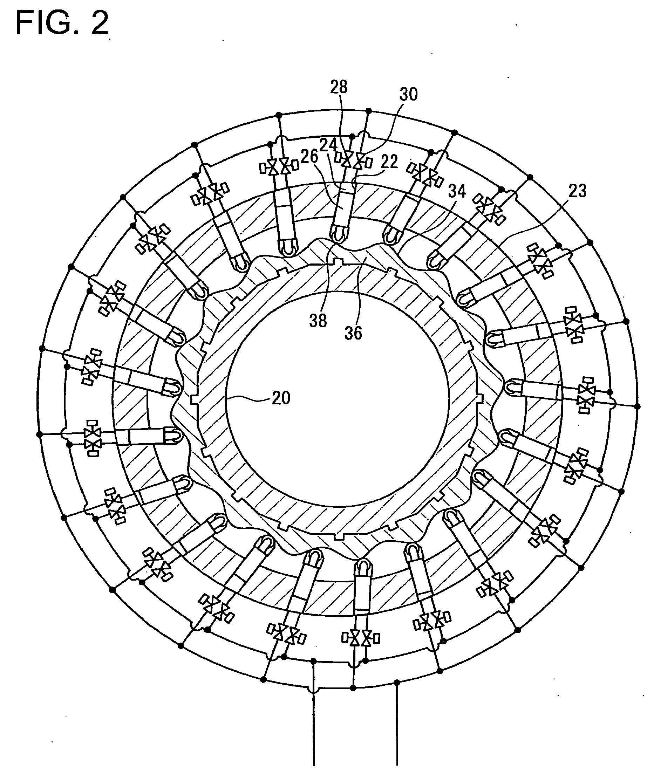

FIG. 2 is a cross-sectional view of a radial piston fluid working machine which is applicable to the hydraulic motor 14 or the hydraulic pump 12. As illustrated in FIG. 2, the fluid working machine comprises a rotation shaft 20, a housing (a cylinder block) 23 extending along a radial direction of the rotational shaft 20 and having at least one cylinder part 22, a piston 26 arranged in the cylinder part 22 and forming a working chamber 24 with the cylinder part 22, and a converting mechanism for performing conversion between reciprocating motion of the piston 26 and rotational motion of the rotation shaft 20.

Further, the cylinder part 22 is a part that defines a cylinder bore in the housing 23. The housing 23 may be one a forming object of one which has the cylinder section 22, or the cylinder section 22 may be an integral object including the cylinder part 22, or may be an assembly including the cylinder part 22 formed by a separate cylinder sleeve (a cylinder liner).

In some embodiments, the fluid working machine has a plurality of control valves for controlling the flow of the working fluid. The control valves includes a high pressure valve 28 for controlling the flow of high-pressure working fluid whose pressure is relatively high and a low-pressure valve 30 for controlling the flow of low-pressure working fluid whose pressure is relatively low.

In the case where the fluid working machine is constituted by the hydraulic pump 12, when the rotation shaft 20 rotates, the converting mechanism operates to cause the piston 26 to reciprocate. While the piston 26 makes reciprocating motion, the low-pressure working fluid is supplied to the working chamber 24 through the low-pressure valve 30, the working fluid is pressurized in the working chamber 24, and then the high-pressure working fluid is discharged from the working chamber 24 through the high pressure valve 28. Specifically, in the case where the fluid working machine is constituted by the hydraulic pump 12, the low-pressure valve 30 functions as a oil supply valve which controls supply of the working fluid to the working chamber 24, and the high-pressure valve 28 functions as a oil discharge valve which controls discharge of the working fluid from the working chamber 24.

In the case where the fluid working machine is constituted by the hydraulic motor 14, when the high-pressure working fluid is supplied to the working chamber 24 through the high-pressure valve 28, fluid energy of the working fluid causes the piston 26 to reciprocate, and the converting mechanism operates to cause the rotation shaft 20 to rotate. Moreover, the working fluid whose pressure has decreased in the working chamber 24 is now discharged from the working chamber 24 through the low-pressure valve 30. Specifically, in the case where the fluid working machine is constituted by the hydraulic motor 14, the high-pressure valve 28 functions as a oil supply valve which controls supply of the working fluid to the working chamber 24, and the low-pressure valve 30 functions as a oil discharge valve which controls discharge of the working fluid from the working chamber 24.

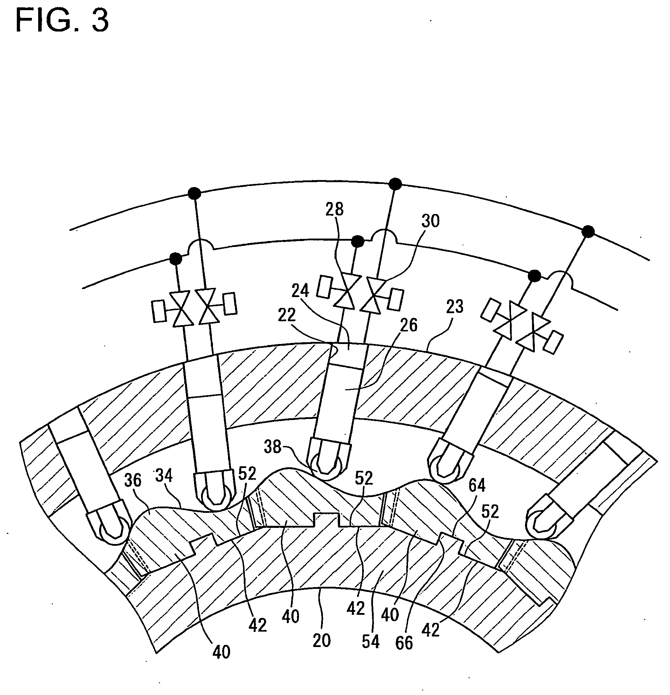

The converting mechanism comprises a lobed cam (a ring cam) 36 fixed to the rotation shaft 20 and having a cam face 34, and a roller 38 interposed between the cam face 34 and the piston 26. FIG. 3 is a partial cross-sectional view expanding and showing a part of FIG. 2. The lobed cam 36 is constituted by a plurality of segments 40 arranged along the circumferential direction of the rotation shaft 20.

Each of the segments 40 has a flat mounting surface 42 facing the rotation shaft 20.

In the above-mentioned power generating apparatus of a renewable energy type, one of the hydraulic pump 12 or the hydraulic motor 14 has the lobed cam 36 constituted by a plurality of segments 40, and each of the segments 40 has a flat mounting surface 42 facing the rotation shaft 20. As the mounting surface 42 of each of the segments 40 is flat, compared to the case where the mounting surface 42 is a curved surface, dimensional accuracy of the mounting surface 42 can be improved. Therefore, dimensional accuracy of the cam face 34 of the lobed cam 36 entirely relies on the dimensional accuracy of the partial cam face 56 and thus, the dimensional accuracy of the cam face 34 can be easily improved. Further, with improved dimensional accuracy of the cam face 34 of the lobed cam 36, the roller 38 can travel on the cam face 34 smoothly. As a result, torque of the rotation shaft 20 can be transmitted to the generator 16 efficiently, thereby improving power generation efficiency.

In some embodiments, the power generating apparatus of a renewable energy type is a wind power generator which generates electric, power using wind among forms of renewable energy such as wind and wave. As illustrated in FIG.1, the wind turbine generator is provided with at least one blade 43 configured to rotate the main shaft 10 upon receiving wind, a tower 44 installed onshore or offshore, and a nacelle 46 supported by the tower 44. A main bearing 48 for rotatably supporting the main shaft 10 is placed with the hydraulic pump 12, the hydraulic motor 14, and the generator 16 inside the nacelle 46. The blade 43 is connected to the main shaft 10 through a hub 50, and the main shaft 10 is connected to the hydraulic pump 12.

The power generating apparatus of a renewable energy type as a wind turbine generator can generate electric power efficiently using wind.

In some embodiments, as illustrated in FIG. 3, the rotation shaft 20 has a plurality of flat loading surfaces 52 facing the plurality of mounting surfaces 42 of the plurality of the segments 40, respectively. The loading surfaces 52 are arranged along the circumferential direction of the rotation shaft 20.

With this configuration, as the rotation shaft 20 has the flat loading surfaces 52, each of the segments 40 can be easily mounted to the rotation shaft 20 by a simple structure. Further, as the mounting surface 42 and the loading surface 52 are both flat, the rotation shaft 20 can support large load. As a result, the converting mechanism can transmit large torque between the piston 26 and the rotation shaft 20.

In some embodiments, the mounting surface 42 comes in direct contact with the loading surface 52.

In some embodiments, each of the loading surfaces 52 extends along a tangent direction of the loading surface 52, and the loading surfaces 52 constitute side faces of a regular polygonal shaft part 54 of the rotation shaft 20.

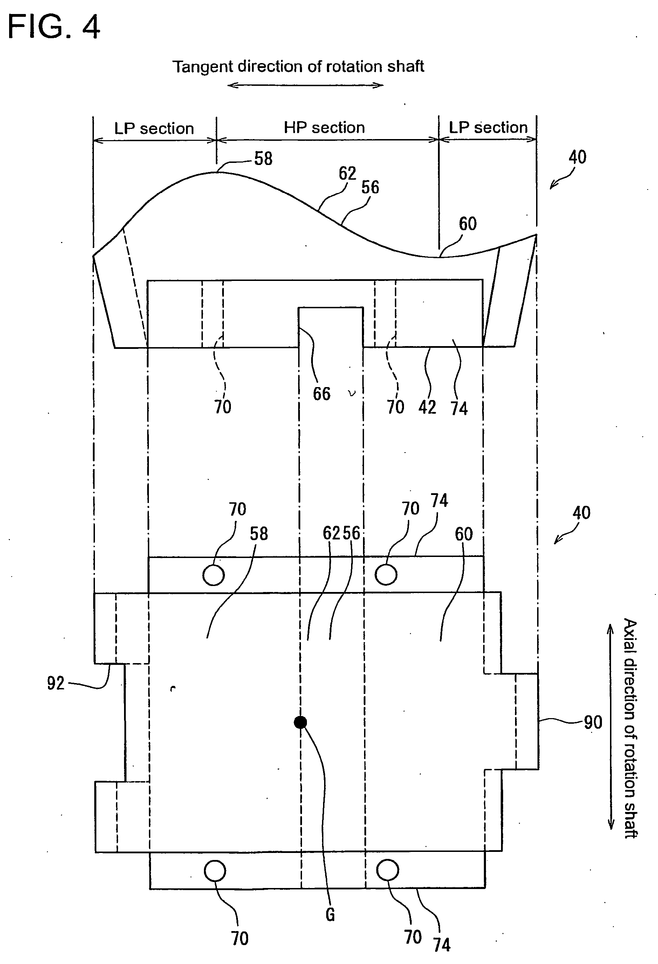

An upper part of FIG. 4 is a side view of a schematic configuration of the segment 40. In some embodiments, each of the segments 40 has, as illustrated in FIG.4, a partial cam face 56 which forms a part of the cam face 34. The partial cam face 56 includes at least one top portion 58 corresponding to a top dead center of the piston 26, at least one bottom portion 60 corresponding to a bottom dead center of the piston 26, and a slope portion 62 extending between the top portion 58 and the bottom portion 60.

The partial cam face 56 includes: a high-pressure section configured so as to contact the roller 38 in a high-pressure period when pressure of the working chamber 24 is high; and a low-pressure section configured so as to contact the roller 38 in a low-pressure period when the pressure of the working chamber 24 is low. It is preferable that the partial cam face 56 is smooth and the high-pressure section of the partial cam face 56, in particular, is smooth. In this point, with this configuration, the partial cam face 56 of each of the segments 40 has the slope portion 62 extending from the top portion 58 to the bottom portion 60. Thus, by arranging the slope portion 62 in the high-pressure section, it is possible to attain a smooth high-pressure section.

In some embodiments, the power generating apparatus of a renewable energy type further comprises a plurality of keys 64 for engaging the plurality of the segments 40 with the rotation shaft 20, as illustrated in FIG. 3.

With this configuration, by means of the plurality of keys 64, the plurality of the segments 40 can be engaged with the rotation shaft 20 by a simple structure.

Further, with this configuration, as the mounting surface 42 is flat, the segment 40 is restricted by the mounting surface 42 from rotating around the rotation shaft 20. Thus, it is possible to reduce the load acting on the key 64, and large torque can act on each of the segments 40. As a result, it is possible to increase the output of the power generating apparatus of a renewable energy type without causing increase in the size of the fluid working machine.

In some embodiments, each of the keys 64 is formed integrally with the rotation shaft 20. Specifically, each of the keys 64 projects along the radial direction of the rotation shaft 20 from a center part of each of the loading surfaces 52 disposed in the center in the tangent direction of the rotation shaft 20, and extends along the axial direction of the rotation shaft 20. Further, a plurality of key grooves 66 which is respectively engageable with the plurality of keys 64 is formed in the plurality of segments 40, respectively. Specifically, each of the key grooves 66 is formed in the center part of each of the segments 40 in the tangent direction of the rotation shaft 20, and opens at each of the mounting surfaces 42. Furthermore, each of the key grooves 66 extends along the axial direction of the rotation shaft 20.

In some embodiments, each of the segments 40 has a reference surface which can serve as a reference to form the partial cam face 56, and the mounting surface 42 constitutes the reference surface.

When forming the partial cam face 56 of the segment 40 by processing, the reference surface for processing is needed. In this point, with this configuration, the flat mounting surface 42 can serve as the reference surface and thus, the dimensional accuracy of the partial cam face 56 can be easily improved. Moreover, the dimension of the partial cam face 56 can be easily inspected using the mounting surface 42 as reference.

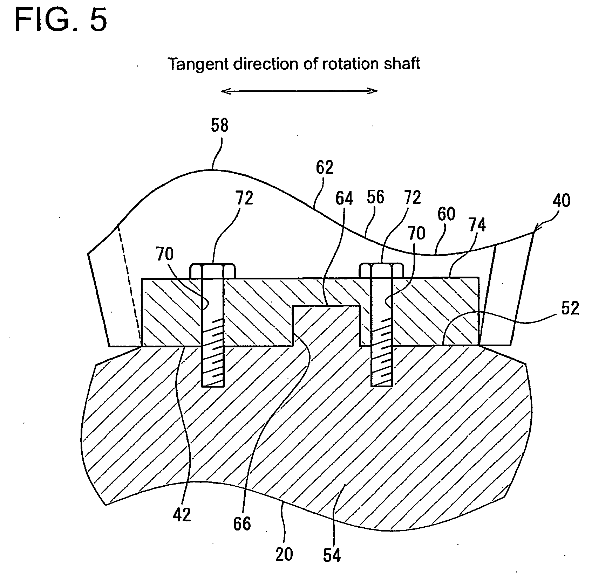

FIG. 5 is a cross-sectional view for explaining a fastening structure between the rotation shaft 20 and the segment 40. In some embodiments, the rotation shaft 20 has a plurality of bolt holes 68 opening in a surface of the rotation shaft 20, each of the segments 40 has a plurality of through-holes 70 communicating with the plurality of bolt holes 68, respectively, and each of the segments 40 is fixed to the rotation shaft 20 with a plurality of bolts 72 extending through the plurality of through-holes 70 and screwed into the plurality of bolt holes 68, respectively.

With this configuration, the segment 40 can be fixed to the rotation shaft 20 reliably by a simple structure.

In some embodiments, as illustrated in the lower part of FIG. 4, the through-hole 70 is disposed in a region outside the slope portion 62.

If the through-hole 70 is disposed in the slope portion 62, a dent is formed in the slope portion 62 due to the through-hole 70. In this point, with this configuration, as the through-hole 70 is disposed in a region outside the slope portion 62, it is possible to make the slope portion 62 smoother.

In some embodiments, as illustrated in FIG. 4, the segment 40 has a fastening portion 74 with the through-hole 70 formed therein, on either side of the slope portion 62 in the axial direction of the rotation shaft 20.

With this configuration, the fastening portion 74 is arranged on either side of the slope portion 62 in the axial direction of the rotation shaft 20. Thus, the entire area of the partial cam face 56 including the slope portion 62 can be made smoother.

In some embodiments, as illustrated in the lower part of FIG. 4, the gravity center G of the segment 40 is located adjacent to the key groove 66. In other words, the gravity center G of the segment 40 is located adjacent to the key 64.

With this configuration, the gravity center G of each of the segments 40 is disposed adjacent to the key 64 and thus, the segment 40 is stabilized by supporting a part of the segment 40 near the gravity center G of the segment 40 by the key 64.

In some embodiments, as illustrated in the lower part of FIG. 4, at least four through-holes 70 are formed in the fastening portions 74, and are arranged symmetrically around the gravity center G. Therefore, the segment 40 is fastened to the rotation shaft 20 using the at least four bolts 72 disposed symmetrically around the gravity center G, thereby stabilizing the segment 40.

In some embodiments, the four bolts 72 are arranged symmetrically with respect to a rotation of 180 degrees about the gravity center G, and the gravity center G is located in the center of diagonal lines of the four bolts 72.

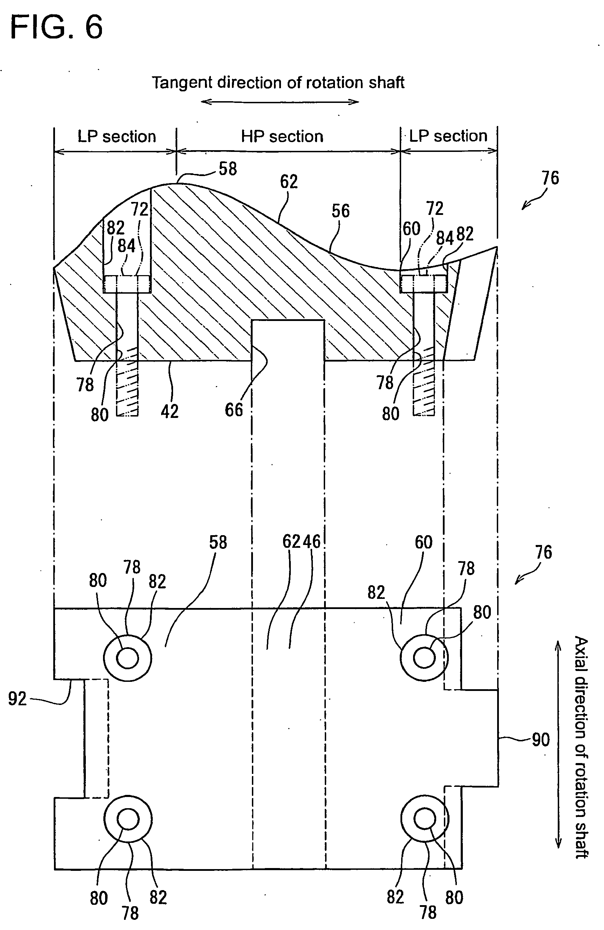

An upper part of FIG. 6 is a cross-sectional view of a schematic configuration of another segment 76 according to some embodiments, and a lower part of FIG. 6 is a plan view of the schematic configuration of the segment 76. This segment 76 does not have the fastening portion 74, and a through-hole 78 for the bolt 72 opens inside the partial cam face 56. The through-hole 78 has a small-diameter part 80 and a large-diameter part 82, and a head 84 of the bolt 72 is accommodated in the large-diameter part 82 to come in contact with a stepped portion between the small-diameter part 80 and the large-diameter part 82.

According to this configuration, the through-hole 78 opens inside the partial cam face 56, and the head 84 of the bolt 72 does not protrude from the partial cam face 56 as the head 84 of the bolt 72 is accommodated in the large-diameter part 82. For this reason, the head 84 of the bolt 72 does not interfere with traveling of the roller 38. Further, with this configuration, it is not necessary to provide the fastening portion 74 on each side of the segment 76 and thus, it is possible to downsize the segment 76.

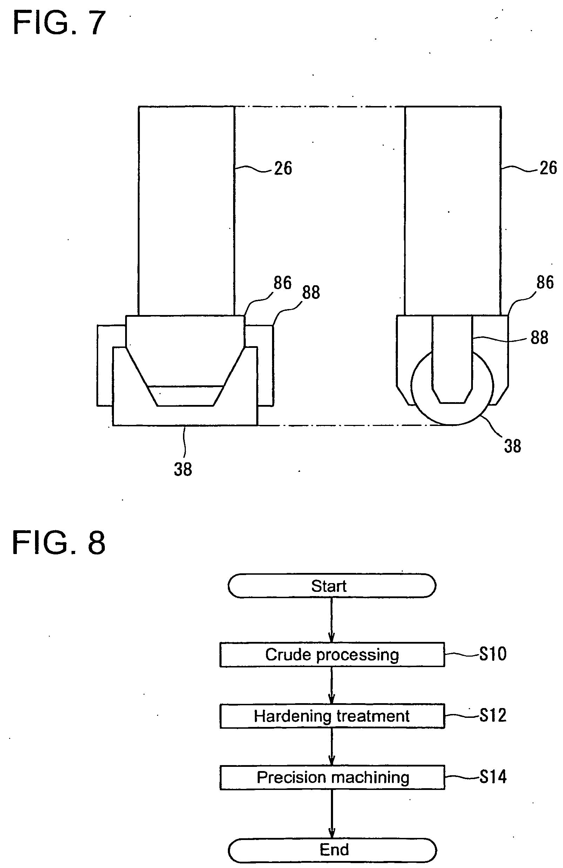

FIG. 7 illustrated two side views of the configuration of the piston 26 and the roller 38. In some embodiments, as illustrated in FIG.7, the piston 26 includes the holding portion 86 for rotatably holding the roller 38 and a regulating portion 88 for regulating movement of the roller 38 in the axial direction of the roller 38.

With this configuration, as the piston 26 includes the regulating portion 88, it is no longer necessary to provide a regulating portion on the rotation shaft 20. This makes it easier to form a smooth partial cam face 56 having a high degree of freedom in the shape of the segment 40.

In some embodiments, the partial cam face 56 includes: a high-pressure section configured so as to contact the roller 38 in a high-pressure period when pressure of the working chamber 24 is high; and a low-pressure section configured so as to contact the roller 38 in a low-pressure period when the pressure of the working chamber 24 is lower than in the high-pressure period, and each end portion of the partial cam face 56 in the tangent direction of the rotation shaft 20 constitutes the low-pressure section.

In the case where the cam face 34 is constituted by a plurality of partial cam faces 56, an irregular region is formed in the cam face 34 by a gap between end portions of adjacent two partial cam faces 56. The irregular region is inevitably rough compared to other regions of the cam face 34. With the above configuration, each end portion of the partial cam face 56 constitutes the low-pressure section and thus, the irregular region is disposed in the low-pressure section. Therefore, even though the irregular region exists in the cam face 34, the roller 38 can travel smoothly on the cam face 34.

In some embodiments, the partial cam face 56 has length which corresponds to one reciprocating motion of the piston 26. With this configuration, as the partial cam face 56 has length which corresponds to one reciprocating motion of the piston 26, the segment 40 can be reduced in size and weight.

In some embodiments, as shown in FIG. 4, the segment 40 has a projecting portion 90 at one end in the tangent direction of the rotation shaft 20, which projects along the tangent direction of the rotation shaft 20, and a recessed portion 92 at the other end, which is recessed along the tangent direction. The recessed portion 92 of one segment 40 is configured to receive the projecting portion 90 of a neighboring segment 40.

According to this configuration, both edges of the partial cam face 56 are no longer straight as the projection portion 90 or the recessed portion 92 is formed therein and, instead, each edge of the partial cam 56 is constituted by a plurality of line disposed in different levels. Thus, even if there is a gap between the end portions of the adjacent partial cam faces 56, at least a part of the roller 38 is always supported in the axial direction of the roller 38 by the partial cam face 56 and thus, the roller 38 travels smoothly on the gap.

FIG. 8 is a flow chart showing a process of a manufacturing method of the segment 40. In some embodiments, the segment 40 is formed by treating material of the segment with crude processing S10, hardening treatment S12 and precision machining S14 in this order.

The crude processing S10 is, for instance, machining. The hardening treatment S12 is, for instance, carburizing quenching treatment, and may be nitriding treatment, film formation treatment or the like. The precision machining S14 is, for instance, polishing or the like.

With this configuration, the lobed cam 36 is constituted by a plurality of segments 40, and each of the segments 40 is formed by treating material of the segment with crude processing S10, hardening treatment S12 and precision machining S14 in this order. Thus, manufacturing of the lobed cam 36 no longer requires a large machine tool or a large furnace. Further, by using the mounting surface 42 as a machining reference surface in the precision machining S14, the dimensional accuracy of the partial cam face 56 can be easily improved.

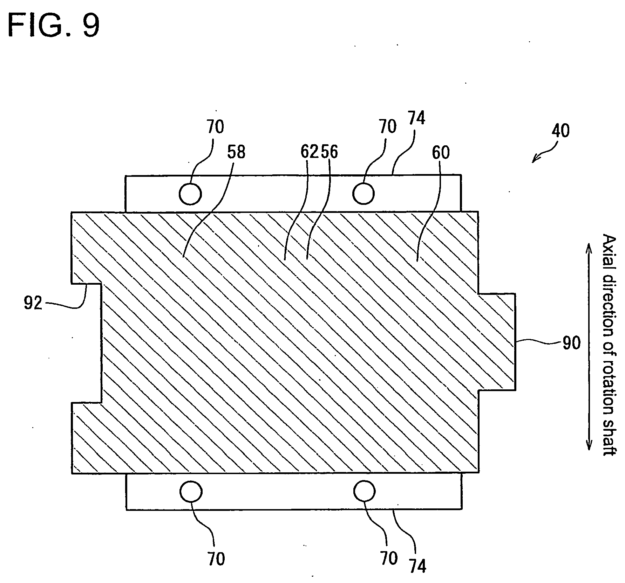

FIG. 9 is a plan view of the segment 40, illustrating a hatched region which is to be treated by the hardening treatment (carburizing quenching treatment) S12. In some embodiments, as illustrated in FIG. 9, the hardening treatment S12 is applied to the entire area of the partial cam face 56.

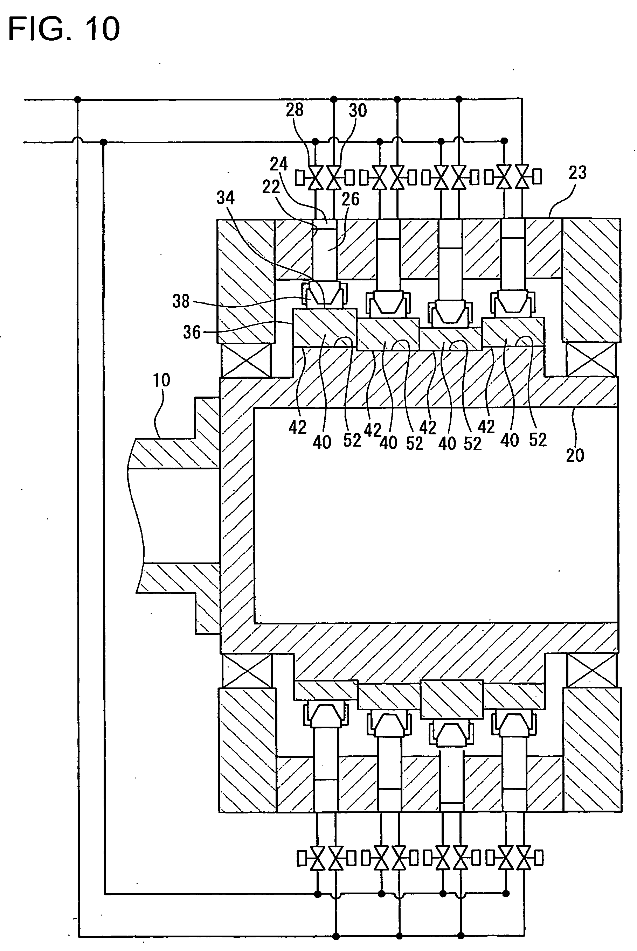

FIG.10 is a schematic longitudinal section of a hydraulic machine. In some embodiments, as illustrated in FIG.2, a plurality of the cylinder parts 22 is arranged along the circumferential direction of the rotation shaft 20, and as illustrated in FIG. 10, a multiple of the plurality of cylinder parts 22 is arranged along the axial direction of the rotation shaft 20. In other words, a plurality of cylinder parts 22 is arranged along the circumferential direction of the rotation shaft 20 to form an annular cylinder array, and a plurality of the annular cylinder arrays is arranged along the axial direction of the rotation shaft 20.

In some embodiments, corresponding to the plurality of the cylinder parts 22 arranged along the circumferential direction and the axial direction of the rotation shaft 20, a plurality of the loading surfaces 52 is arranged along the circumferential direction and the axial direction of the rotation shaft 20. In other words, a plurality of the loading surfaces 52 is arranged along the circumferential direction of the rotation shaft 20 to form an annular loading surface array, and a plurality of the annular loading surfaces is arranged along the axial direction of the rotation shaft 20.

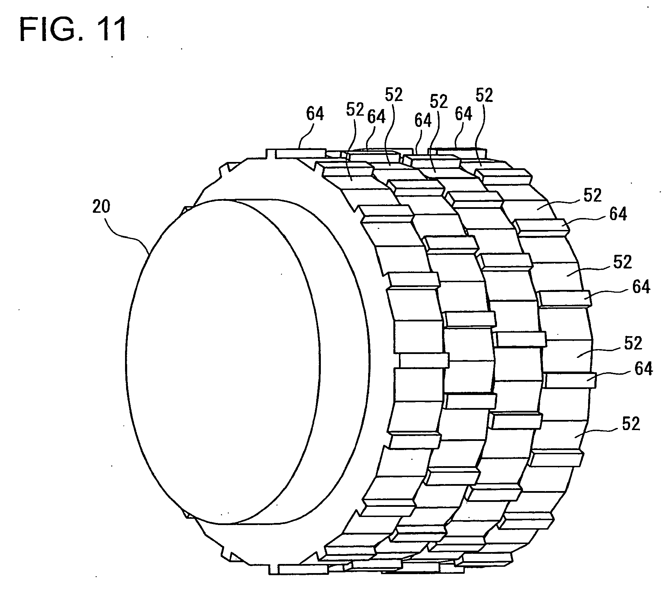

FIG.11 is a perspective view illustrating a configuration of the rotation shaft 20. In some embodiments, as illustrated in FIG. 11, a plurality of the annular loading surface arrays is arranged such that relative rotation angles are displaced from each other around the rotation shaft 20. The rotation angle difference among the loading surface arrays corresponds to the number of the loading surfaces 52 in the circumferential direction of the rotation shaft 20 and the number of the loading surface arrays.

According to this composition, the phase of reciprocating motion of the pistons 26 can be varied from one another according to the location in the circumferential direction and the axial direction of the rotation shaft 20, and conversion between the reciprocating motion of the pistons 26 and the rotational motion of the rotation shaft 20 can be performed smoothly.

While the embodiments of the present invention have been described in details, it is obvious to those skilled in the art that various changes may be made without departing from the scope of the invention. For instance, any of the above embodiments may be arbitrarily combined.

Moreover, the term "along" used when explaining the above-mentioned embodiments indicates not only the state of being strictly parallel to a reference direction or a reference object in a geometric meaning but also the state of being at an certain angle (e.g. 30 degrees or less) with respect to a reference direction or a reference object.

### [Reference Signs list]

- 10: Main shaft
- 12: Hydraulic pump
- 14: Hydraulic motor
- 16: Generator
- 20: Rotation shaft
- 22: Cylinder part
- 23: Housing
- 24: Working chamber
- 26: Piston
- 28: High-pressure valve
- 30: Low-pressure valve
- 34: Cam face
- 36: Lobed cam
- 38: Roller
- 40: Segment
- 42: Mounting surface
- 43: Blade
- 44: Tower
- 46: Nacelle
- 48: Main bearing
- 50: Hub
- 52: Loading surface
- 54: Shaft part
- 56: Partial cam face
- 58: Top portion
- 60: Bottom portion
- 62: Slope portion
- 64: Key
- 66: Key groove
- 68: Bolt hole
- 70: Through-hole
- 72: Bolt
- 74: Fastening portion
- 76: Segment
- 78: Through-hole
- 80: Small-diameter part
- 82: Large-diameter part
- 84: Head
- 86: Holding portion
- 88: Regulating portion
- 90: Projecting portion
- 92: Recessed portion

## Claims

1. A power generating apparatus of a renewable energy type for generating electric power from renewable energy, the apparatus comprising:
a main shaft (10) configured to rotate using the renewable energy;
a hydraulic pump (12) configured to pressurize and discharge working fluid by torque of the main shaft (10);
a hydraulic motor (14) configured to apply torque using pressure of the working fluid discharged by the hydraulic pump (12); and
a generator (16) configured to generate power using the torque applied by the hydraulic motor (14);
a fluid working machine of a radial piston type constituted by one of the hydraulic pump (12) or the hydraulic motor (14), the fluid working machine comprising:
a rotation shaft (20);
at least one cylinder part (22) extending along a radial direction of the rotation shaft (20);
a piston (26) arranged in the at least one cylinder part (22) and forming a working chamber (24) with the at least one cylinder part; and
a converting mechanism for performing conversion between reciprocating motion of the piston (26) and rotational motion of the rotation shaft (20), wherein
the converting mechanism comprises:
a lobed cam (36) fixed to the rotation shaft (20) and having a cam face (34); and
a roller (38) interposed between the cam face (34) and the piston (26), and
the lobed cam (36) is formed by a plurality of segments (40) arranged along a circumferential direction of the rotation shaft (20, **characterised by** each of the plurality of the segments (40) having a flat mounting surface (42) facing the rotation shaft (20).

2. The power generating apparatus of a renewable energy type according to claim 1, wherein
the rotation shaft (20) has a plurality of flat loading surfaces (52) facing the mounting surfaces (42) of the plurality of the segments (40), respectively.

3. The power generating apparatus of a renewable energy type according to claim 1 or 2, wherein
each of the segments (40) has a partial cam face (56) which forms a part of the cam face (34), and
the partial cam face (56) includes at least one top portion (58) corresponding to a top dead center of the piston (26), at least one bottom portion (60) corresponding to a bottom dead center of the piston (26), and a slope portion (62) extending between the top portion (58) and the bottom portion (60).

4. The power generating apparatus of a renewable energy type according to any one of claims 1 to 3, the apparatus further comprising:
a plurality of keys (64) for engaging the plurality of the segments (40) with the rotation shaft (20).

5. The power generating apparatus of a renewable energy type according to any one of claims 1 to 4, wherein
each of the keys (64) is disposed adjacent to the center of gravity of each of the segments (40).

6. The power generating apparatus of a renewable energy type according to any one of claims 1 to 5, wherein
each of the segments (40) has a reference surface which is usable as a reference to form the partial cam face (56), and
the mounting surface (42) constitutes the reference surface.

7. The power generating apparatus of a renewable energy type according to any one of claims 1 to 6**,** wherein
the rotation shaft (20) has a plurality of bolt holes (68) opening in a surface of the rotation shaft,
each of the segments (40) has a through-hole (70) communicating with one of the plurality of bolt holes (68), and
each of the segments (40) is fixed to the rotation shaft (20) by a bolt (72) extending through the through-hole (70) and screwed into are of the plurality of bolt holes (68).

8. The power generating apparatus of a renewable energy type according to claim 7, wherein
the through-hole (70) is disposed in a region outside a slope portion (62).

9. The power generating apparatus of a renewable energy type according to claim 8, wherein
the segment (40) includes a fastening portion (74) where the through-hole (70) is formed, the fastening portion (74) being arranged on both sides of the slope portion (62) extending in an axial direction of the rotation shaft (20).

10. The power generating apparatus of a renewable energy type according to claim 9, wherein
a plurality of bolts (72) includes four bolts disposed symmetrically around the center of gravity of each of the segments (40).

11. The power generating apparatus of a renewable energy type according to any one of claims 1 to 10, wherein
the piston (26) includes a regulating portion (88) for regulating movement of the roller (38) in an axial direction of the roller.

12. The power generating apparatus of a renewable energy type according to any one of claims 1 to 11, wherein
a partial cam face (56) includes:
a high-pressure section configured so as to contact the roller (38) in a high-pressure period in which pressure of the working chamber (24) is high; and
a low-pressure section configured so as to contact the roller (38) in a low-pressure period in which the pressure of the working chamber (24) is lower than in the high-pressure period, and
each end portion of the partial cam faces in a tangent direction of the rotation shaft (20) constitutes the low-pressure section.

13. The power generating apparatus of a renewable energy type according to any one of claims 1 to 12, wherein
a partial cam face (56) has length which corresponds to one reciprocating motion of the piston (26).

14. The power generating apparatus of a renewable energy type according to any one of claims 1 to 13, wherein
the segments (40) are formed by treating material of the segment with crude processing, hardening treatment and precision machining in this order.

15. The power generating apparatus of a renewable energy type according to any one of claims 1 to 14, wherein
the power generating apparatus of a renewable energy type further comprises at least one blade (43) configured to rotate the rotation shaft (20) upon receiving wind in a form of the renewable energy, and is a wind turbine generator.

## Patentansprüche

1. Stromerzeugungsvorrichtung vom Typ erneuerbare Energien zum Erzeugen von elektrischem Strom aus erneuerbarer Energie, wobei die Vorrichtung umfasst:
eine Hauptwelle (10), die dafür konfiguriert ist, sich unter der Einwirkung erneuerbarer Energie zu drehen,
eine Hydraulikpumpe (12), die dafür konfiguriert ist, ein Arbeitsfluid durch Drehmoment der Hauptwelle (10) mit Druck zu beaufschlagen und auszugeben,
einen Hydraulikmotor (14), der dafür konfiguriert ist, mittels des Drucks des durch die Hydraulikpumpe (12) abgegebenen Arbeitsfluids ein Drehmoment anzulegen, und
einen Generator (16), der dafür konfiguriert ist, Energie unter Nutzung des durch den Hydraulikmotor (14) angelegten Drehmoments zu erzeugen,
eine Fluidarbeitsmaschine vom Radialkolbentyp, die durch die Hydraulikpumpe (12) oder den Hydraulikmotor (14) gebildet wird, wobei die Fluidarbeitsmaschine umfasst:
eine Drehwelle (20),
mindestens einen Zylinderteil (22), der sich entlang einer radialen Richtung der Drehwelle (20) erstreckt,
einen Kolben (26), der in dem mindestens einen Zylinderteil (22) angeordnet ist und eine Arbeitskammer (24) mit dem mindestens einen Zylinderteil bildet, und
einen Umwandlungsmechanismus zum Ausführen einer Umwandlung zwischen einer Hubbewegung des Kolbens (26) und einer Drehbewegung der Drehwelle (20), wobei
der Umwandlungsmechanismus umfasst:
einen Zackennocken (36), der an der Drehwelle (20) fixiert ist und eine Nockenfläche (34) hat, und
eine Rolle (38), die zwischen der Nockenfläche (34) und dem Kolben (26) angeordnet ist, und wobei
der Zackennocken (36) durch mehrere Segmente (40) gebildet wird, die entlang einer Umfangsrichtung der Drehwelle (20) angeordnet sind, **dadurch gekennzeichnet, dass** jedes der mehreren Segmente (40) eine flache Montagefläche (42) hat, die der Drehwelle (20) zugewandt ist.

2. Stromerzeugungsvorrichtung vom Typ erneuerbare Energien nach Anspruch 1,
wobei
die Drehwelle (20) mehrere flache Belastungsflächen (52) hat, die jeweils den Montageflächen (42) der mehreren Segmente (40) zugewandt sind.

3. Stromerzeugungsvorrichtung vom Typ erneuerbare Energien nach Anspruch 1 oder 2, wobei
jedes der Segmente (40) eine teilweise Nockenfläche (56) hat, die einen Teil der Nockenfläche (34) bildet, und
die teilweise Nockenfläche (56) mindestens einen oberen Abschnitt (58) enthält, der einem oberen Totpunkt des Kolbens (26) entspricht, mindestens einen unteren Abschnitt (60) enthält, der einem unteren Totpunkt des Kolbens (26) entspricht, und einen Neigungsabschnitt (62) enthält, der sich zwischen dem oberen Abschnitt (58) und dem unteren Abschnitt (60) erstreckt.

4. Stromerzeugungsvorrichtung vom Typ erneuerbare Energien nach einem der Ansprüche 1 bis 3, wobei die Vorrichtung ferner umfasst:
mehrere Keilprofile (64) zum Ineingriffbringen der mehreren Segmente (40) mit der Drehwelle (20).

5. Stromerzeugungsvorrichtung vom Typ erneuerbare Energien nach einem der Ansprüche 1 bis 4, wobei
jedes der Keilprofile (64) neben dem Masseschwerpunkt jedes der Segmente (40) angeordnet ist.

6. Stromerzeugungsvorrichtung vom Typ erneuerbare Energien nach einem der Ansprüche 1 bis 5, wobei
jedes der Segmente (40) eine Referenzfläche hat, die als eine Referenz zum Ausbilden der teilweisen Nockenfläche (56) verwendet werden kann, und
die Montagefläche (42) die Referenzfläche bildet.

7. Stromerzeugungsvorrichtung vom Typ erneuerbare Energien nach einem der Ansprüche 1 bis 6, wobei
die Drehwelle (20) mehrere Schraubenlöcher (68) hat, die in eine Oberfläche der Drehwelle hinein öffnen,
jedes der Segmente (40) ein Durchgangsloch (70) hat, das mit einem der mehreren Schraubenlöcher (68) in Strömungsverbindung steht, und
jedes der Segmente (40) an der Drehwelle (20) durch eine Schraube (72) fixiert ist, die sich durch das Durchgangsloch (70) erstreckt und in eines der mehreren Schraubenlöcher (68) geschraubt ist.

8. Stromerzeugungsvorrichtung vom Typ erneuerbare Energien nach Anspruch 7,
wobei
das Durchgangsloch (70) in einer Region außerhalb eines Neigungsabschnitts (62) angeordnet ist.

9. Stromerzeugungsvorrichtung vom Typ erneuerbare Energien nach Anspruch 8,
wobei
das Segment (40) einen Befestigungsabschnitt (74) enthält, wo das Durchgangsloch (70) ausgebildet ist, wobei der Befestigungsabschnitt (74) auf beiden Seiten des Neigungsabschnitts (62) angeordnet ist, der sich in einer axialen Richtung der Drehwelle (20) erstreckt.

10. Stromerzeugungsvorrichtung vom Typ erneuerbare Energien nach Anspruch 9,
wobei
die mehreren Schrauben (72) vier Schrauben enthalten, die symmetrisch um den Masseschwerpunkt eines jeden Segments (40) herum angeordnet sind.

11. Stromerzeugungsvorrichtung vom Typ erneuerbare Energien nach einem der Ansprüche 1 bis 10, wobei
der Kolben (26) einen Regelabschnitt (88) zum Regeln der Bewegung der Rolle (38) in einer axialen Richtung der Rolle enthält.

12. Stromerzeugungsvorrichtung vom Typ erneuerbare Energien nach einem der Ansprüche 1 bis 11, wobei
eine teilweise Nockenfläche (56) enthält:
einen Hochdruckabschnitt, der so konfiguriert ist, dass er die Rolle (38) in einem Hochdruckzeitraum berührt, in dem der Druck der Arbeitskammer (24) hoch ist, und
einen Niederdruckabschnitt, der so konfiguriert ist, dass er die Rolle (38) in einem Niederdruckzeitraum berührt, in dem der Druck der Arbeitskammer (24) niedriger ist als in dem Hochdruckzeitraum, und
jeder Endabschnitt der teilweisen Nockenflächen in einer tangentialen Richtung der Drehwelle (20) den Niederdruckabschnitt bildet.

13. Stromerzeugungsvorrichtung vom Typ erneuerbare Energien nach einem der Ansprüche 1 bis 12, wobei
eine teilweise Nockenfläche (56) eine Länge hat, die einer einzelnen Hubbewegung des Kolbens (26) entspricht.

14. Stromerzeugungsvorrichtung vom Typ erneuerbare Energien nach einem der Ansprüche 1 bis 13, wobei
die Segmente (40) gebildet werden, indem man Material des Segments mittels Grobbearbeitung, Härtungsbehandlung und Präzisionsbearbeitung - in dieser Reihenfolge - behandelt.

15. Stromerzeugungsvorrichtung vom Typ erneuerbare Energien nach einem der Ansprüche 1 bis 14, wobei
die Stromerzeugungsvorrichtung vom Typ erneuerbare Energien ferner mindestens einen Flügel (43) umfasst, der dafür konfiguriert ist, die Drehwelle (20) beim Auftreffen von Wind als einer Form der erneuerbaren Energie zu drehen, und ein Windturbinengenerator ist.

## Revendications

1. Appareil de génération d'énergie du type à énergie renouvelable pour générer de l'énergie électrique à partir d'une énergie renouvelable, l'appareil comportant :
un arbre principal (10) configuré pour tourner en utilisant l'énergie renouvelable ;
une pompe hydraulique (12) configurée pour mettre en pression et refouler un fluide de travail grâce à un couple de l'arbre principal (10) ;
un moteur hydraulique (14) configuré pour appliquer un couple en utilisant une pression du fluide de travail refoulé par la pompe hydraulique (12) ; et
une génératrice (16) configurée pour générer de l'énergie en utilisant le couple appliqué par le moteur hydraulique (14) ;
une machine de travail à fluide du type à piston radial constitué par un de la pompe hydraulique (12) ou du moteur hydraulique (14), la machine de travail à fluide comportant :
un arbre de rotation (20) ;
au moins une partie de cylindre (22) s'étendant le long d'une direction radiale de l'arbre de rotation (20) ;
un piston (26) disposé dans la au moins une partie de cylindre (22) et formant une chambre de travail (24) avec la au moins une partie de cylindre ; et
un mécanisme de conversion destiné à réaliser une conversion entre un mouvement de va-et-vient du piston (26) et un mouvement de rotation de l'arbre de rotation (20), dans lequel
le mécanisme de conversion comporte :
une came lobée (36) fixée sur l'arbre de rotation (20) et ayant une face de came (34) ; et
un rouleau (38) interposé entre la face de came (34) et le piston (26), et
la came lobée (36) est formée par une pluralité de segments (40) disposés le long d'une direction circonférentielle de l'arbre de rotation (20), **caractérisé en ce que** chaque segment de la pluralité de segments (40) a une surface de montage plate (42) faisant face à l'arbre de rotation (20).

2. Appareil de génération d'énergie du type à énergie renouvelable selon la revendication 1, dans lequel
l'arbre de rotation (20) a une pluralité de surfaces de charge plates (52) faisant face aux surfaces de montage (42) de la pluralité de segments (40), respectivement.

3. Appareil de génération d'énergie du type à énergie renouvelable selon la revendication 1 ou 2, dans lequel
chacun des segments (40) a une face de came partielle (56) qui forme une partie de la face de came (34), et
la face de came partielle (56) comprend au moins une partie supérieure (58) correspondant à un point mort haut du piston (26), au moins une partie inférieure (60) correspondant à un point mort bas du piston (26), et une partie de pente (62) s'étendant entre la partie supérieure (58) et la partie inférieure (60).

4. Appareil de génération d'énergie du type à énergie renouvelable selon l'une quelconque des revendications 1 à 3, l'appareil comportant en outre :
une pluralité de clavettes (64) destinées à engager la pluralité de segments (40) avec l'arbre de rotation (20).

5. Appareil de génération d'énergie du type à énergie renouvelable selon l'une quelconque des revendications 1 à 4, dans lequel
chacune des clavettes (64) est disposée de façon adjacente au centre de gravité de chacun des segments (40).

6. Appareil de génération d'énergie du type à énergie renouvelable selon l'une quelconque des revendications 1 à 5, dans lequel
chacun des segments (40) a une surface de référence qui est utilisable comme référence pour former la face de came partielle (56), et
la surface de montage (42) constitue la surface de référence.

7. Appareil de génération d'énergie du type à énergie renouvelable selon l'une quelconque des revendications 1 à 6, dans lequel
l'arbre de rotation (20) a une pluralité de trous de boulon (68) s'ouvrant dans une surface de l'arbre de rotation,
chacun des segments (40) a un trou débouchant (70) qui communique avec un trou de la pluralité de trous de boulon (68), et
chacun des segments (40) est fixé sur l'arbre de rotation (20) par un boulon (72) s'étendant à travers le trou débouchant (70) et vissé dans un trou de la pluralité de trous de boulon (68).

8. Appareil de génération d'énergie du type à énergie renouvelable selon la revendication 7, dans lequel le trou débouchant (70) est disposé dans une zone à l'extérieur d'une partie de pente (62).

9. Appareil de génération d'énergie du type à énergie renouvelable selon la revendication 8, dans lequel le segment (40) comprend une partie de fixation (74) où le trou débouchant (70) est formé, la partie de fixation (74) étant disposée sur les deux côtés de la partie de pente (62) s'étendant dans une direction axiale de l'arbre de rotation (20).

10. Appareil de génération d'énergie du type à énergie renouvelable selon la revendication 9, dans lequel une pluralité de boulons (72) comprend quatre boulons disposés de manière symétrique autour du centre de gravité de chacun des segments (40).

11. Appareil de génération d'énergie du type à énergie renouvelable selon l'une quelconque des revendications 1 à 10, dans lequel le piston (26) comprend une partie de régulation (88) pour réguler un mouvement du rouleau (38) dans une direction axiale du rouleau.

12. Appareil de génération d'énergie du type à énergie renouvelable selon l'une quelconque des revendications 1 à 11, dans lequel
une face de came partielle (56) comprend :
une section à haute pression configurée de façon à être en contact avec le rouleau (38) dans une période à haute pression dans laquelle la pression de la chambre de travail (24) est élevée ; et
une section à basse pression configurée de façon à être en contact avec le rouleau (38) dans une période à basse pression dans laquelle la pression de la chambre de travail (24) est plus faible que pendant la période à haute pression, et
chaque partie d'extrémité des faces de came partielle dans une direction tangente à l'arbre de rotation (20) constitue la section à basse pression.

13. Appareil de génération d'énergie du type à énergie renouvelable selon l'une quelconque des revendications 1 à 12, dans lequel une face de came partielle (56) a une longueur qui correspond à un mouvement de va-et-vient du piston (26).

14. Appareil de génération d'énergie du type à énergie renouvelable selon l'une quelconque des revendications 1 à 13, dans lequel les segments (40) sont formés en traitant le matériau du segment avec un traitement brut, un traitement de durcissement et un usinage de précision, dans cet ordre.

15. Appareil de génération d'énergie du type à énergie renouvelable selon l'une quelconque des revendications 1 à 14, dans lequel l'appareil de génération d'énergie du type à énergie renouvelable comporte en outre au moins une pale (43) configurée pour faire tourner l'arbre de rotation (20) lors de la réception de vent sous forme de l'énergie renouvelable, et est une éolienne.
